# FASCICULE DE BREVET EUROPEEN

(11) **EP 0 359 643 B1**
(45) Date de publication et mention de la délivrance du brevet: **06.04.1994**
(21) Numéro de dépôt: 89402464.5
(22) Date de dépôt: 08.09.1989
(51) Int. Cl.: A47C 31/02

(54) **Dispositif d'accrochage permettant la réalisation de rappels de tissus de recouvrement de sièges**
Befestigungsvorrichtung zum Festspannen von Sitzüberzügen
Fastening device for tightening seat covers

(30) Priorité: 14.09.1988 FR 8811971
(43) Date de publication de la demande: 21.03.1990
(73) Titulaire: NOBEL PLASTIQUES, F-92000 Nanterre (FR)
(72) Inventeur: Estran, Guy, F-60630 Attichy (FR)
(74) Mandataire: Robert, Jean-Pierre

(56) Documents cités:
- EP-A- 0 231 692
- EP-A- 0 280 148
- DE-U- 8 813 906
- FR-A- 2 534 464
- US-A- 4 789 201

## Description

La présente invention concerne un dispositif d'accrochage permettant la réalisation de rappels de tissus de recouvrement de sièges, consistant en une bande ou en un matériau relativement résistant se terminant par une barre.

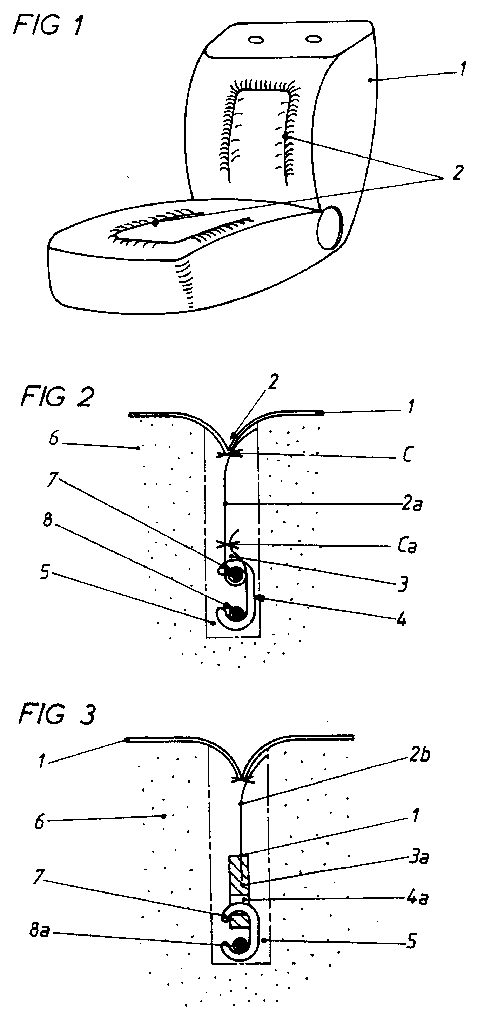

On rappellera tout d'abord, en se référant aux schémas des figures 1 à 3 des dessins annexés, que sur l'assise ou sur le dossier de sièges en tissu ou en matériau relativement souple, ce dernier 1 également dénommé "coiffe" dans le domaine de la tapisserie ou de la matelasserie comporte généralement des plis, des enfoncements ou des empreintes 2 obtenus à l'aide de rappels en vue d'améliorer l'esthétique et le confort dudit siège. De telles empreintes ou plis sont généralement réalisés de la façon suivante :

En se référant à la figure 2, ladite empreinte 2 résulte d'une opération qui consiste à coudre sur l'envers de la coiffe 1 une bande de tissu 2a dont l'extrémité est repliée et cousue pour former un tunnel 3 ouvert à ses deux extrémités permettant le passage d'une tringle ou jonc 4. L'ensemble ainsi formé est introduit dans un puits 5 réalisé dans la matière constitutive 6 du coussin destiné à former l'assise ou le dossier du siège à confectionner.

On se sert alors de ladite tringle ou dudit jonc 4 pour exercer un effet de traction (effet de rappel) sur la coiffe vers le fond du puits, ce qui se traduira par la formation des plis ou empreintes 2 désirés.

Cette traction doit également être maintenue dans le temps : il y a donc lieu de prévoir un système d'amarrage permanent. Dans les modes de réalisation connus, un tel système de traction et d'amarrage est constitué suivant la variante illustrée à la figure 2 par des agrafes 7 disposées le long de ladite tringle 4; ces agrafes désignées dans le métier par agrafes "nez de porc" sont elles-mêmes amarrées sur une tringle 8 disposée au fond du puits 5.

Or ce mode de réalisation présente un certain nombre d'inconvénients, à savoir :
- l'obligation de procéder à deux opérations de couture en C et Ca ;
- la nécessité de procéder à l'opération délicate d'enfilage de la tringle 4 dans le tunnel 3 en veillant également à munir ces tringles d'extrémités arrondies évitant l'accrochage du tissu lors de cet enfilage ;
- la nécessité de disposer les agrafes "nez de porc" 7 le long dudit tunnel dans lequel a été insérée la tringle correspondante 4, ce qui demande un travail long et minutieux faisant de plus appel à des pinces spéciales de manipulation ;
- l'obligation de prévoir la pose appropriée et le maintien en place de la tringle 8 dans le fond du puits 5.

En se référant maintenant à la variante illustrée sur la figure 3, celle-ci vise la suppression d'au moins l'une des tringles dont il est fait usage dans la variante précédente.

Le dispositif d'accrochage comporte alors à l'extrémité d'une bande en matériau résistant 2b, également cousue comme la bande 2a de la variante de la figure 2 à l'envers de la coiffe 1, une barre 3a présentant un évidement ou une lumière 4a. Cet ensemble est, comme précédemment, placé dans le puits 5 du matériau 6 constitutif du coussin de siège.

Comme précédemment, également, il est mis en tension au moyen d'agrafes "nez de porc" 7 dont l'une des extrémités arrondies s'insère dans l'évidement ou la lumière 4a et dont l'autre s'amarre à une tringle 8a noyée dans ledit matériau 6 et au fond du puits 5.

Si cette solution ne supprime pas l'opération d'agrafage qu'il était nécessaire d'effectuer dans le cadre de la variante de la figure 2, elle présente néanmoins les avantages suivants :
- très bon confort de l'assise ;
- pas de risque de déformation permanent en cas de charge localisée ;
- gain de temps lié à la suppression d'une couture.

EP-A-0 231 692, correspondant au préambule de la revendication 1, décrit un siège comportant des moyens de rappel de la coiffe vers la matelassure pour former des parties en creux comportant une pièce en matière plastique comportant de minces tiges à l'extrémité desquelles sont situés des moyens de fixation à l'intérieur ou au delà de la matelassure dudit siège.

Les moyens divulgués ne permettent pas l'accrochage simple et direct à une tige située au fond d'un puits.

EP-A-0 240 388 décrit un siège comportant un moyen de rappel de la coiffe vers la matelassure muni d'une bande de toile fixée à la coiffe solidaire d'une poutre comportant des moyens d'accrochage en forme de harpon ou d'ancre de marine.

De tels moyens ne permettent pas l'accrochage à une simple tige et nécessitent à titre d'élément complémentaire un réseau de fils.

EP-A-0 280 148 décrit un dispositif d'accrochage comprenant une bande comportant une tringle, cette tringle permettant à l'aide d'une agrafe "nez de porc" rapportée l'accrochage à une autre tringle prévue au fond d'un puits.

Or, la présente invention vise un nouveau mode de réalisation des empreintes 2 grâce à un dispositif ne faisant pas appel à de telles agrafes "nez de porc".

Ce mode de réalisation d'accrochage et d'amarrage se caractérise par le fait que la barre est elle-même solidaire d'un moyen d'accrochage muni à sa partie inférieure de plusieurs mâchoires. Ces mâchoires sont de préférence au nombre de deux.

Conformément à l'invention, ladite bande est cousue à l'envers d'une coiffe destinée à servir de revêtement pour un siège et ledit mousqueton est destiné à coopérer avec une tringle prévue au fond du puits réalisé au sein dudit siège. Ladite tringle est en général un cylindre métallique allongé mais ce cylindre peut être remplacé par un dispositif analogue apte à coopérer avec le mousqueton. On peut citer par exemple des mailles et des grillages, métalliques ou non.

La bande sera de préférence en un matériau souple mais résistant notamment à la traction, compte tenu de son utilisation pour la confection de sièges et, de plus, apte à être cousue, collée ou soudée.

Le mousqueton possède avantageusement une structure qui le rend capable de s'encliqueter sur la tringle par simple insertion dans le puits.

La présente demande a enfin pour objet l'application du dispositif d'accrochage ci-dessus à la réalisation de rappels de coiffes de sièges.

D'autres modes particuliers de réalisation selon l'invention sont indiqués dans les revendications 4 et 5.

D'autres caractéristiques et les avantages de l'invention ressortiront plus clairement de la description qui va suivre, faite en regard des dessins annexés qui, en plus des figures 1 à 3 dont il a déjà été question ci-dessus, comportent :
- la figure 4 qui illustre, vu en coupe et schématiquement, le dispositif selon l'invention qui a permis de réaliser l'empreinte désirée sur la coiffe de l'un des éléments constitutifs d'un siège :
- les figures 5a et 5b représentent le mousqueton faisant partie du dispositif de l'invention dans deux configurations différentes au cours de la réalisation de ladite empreinte :
- et la figure 5c est une vue en perspective d'un dispositif selon l'invention réalisé en un matériau plastique ;
- enfin, la figure 6 représente une forme possible avantageuse du mousqueton appliqué au dispositif selon l'invention.

En se référant à ces figures, le dispositif selon l'invention est constitué d'une bande du type tissu, toile en matière textile, naturelle ou synthétique 2c, destinée à être cousue sur l'envers de la coiffe 1 qui constitue le revêtement d'un coussin de siège 6.

L'extrémité de cette bande 2c opposée à la couture D est munie d'une barre 3b. Cette dernière se présente, suivant un mode de réalisation préféré, sous la forme d'une poutre munie d'une fente F à l'intérieur de laquelle est insérée et solidement maintenue, par tout moyen approprié, ladite extrémité de ladite bande 2c. Lorsque cette bande 2c et cette poutre 3b sont en une matière plastique, le montage et la solidarisation des deux éléments sont obtenus avantageusement par soudage. Ce soudage peut être réalisé notamment par co-extrusion, ce qui simplifie remarquablement la fabrication du dispositif d'accrochage selon la présente invention. En effet, un seul profil fait à la fois fonction de poutre et d'agrafe, et on découpe ensuite des emplacements de manière à ménager une succession d'agrafes ; par exemple les agrafes peuvent avoir 0,5 à 1 cm de large et peuvent être espacées de 1 à 3 cm les unes des autres (cf. figure 5c).

Bien entendu, tout autre mode d'assemblage peut être envisagé.

Par ailleurs, la poutre 3b est munie à sa partie inférieure de plusieurs mâchoires 7a se terminant par des languettes 7b et 7c en matériau élastique et disposées à la manière des languettes d'un mousqueton.

De plus, le dispositif selon l'invention est appelé à coopérer avec une tringle 8b, comme il sera décrit ci-après.

Comme dans les cas connus, cette tringle 8b est noyée au fond du puits 5. Le matériau 2c auquel est fixée la poutre 3b munie de son mousqueton 4 est inséré dans le puits dans le sens de la flèche F1. Les languettes 7b et 7c de ce mousqueton sont sollicitées, grâce à leur élasticité propre, vers le haut dans le sens de la flèche F1.

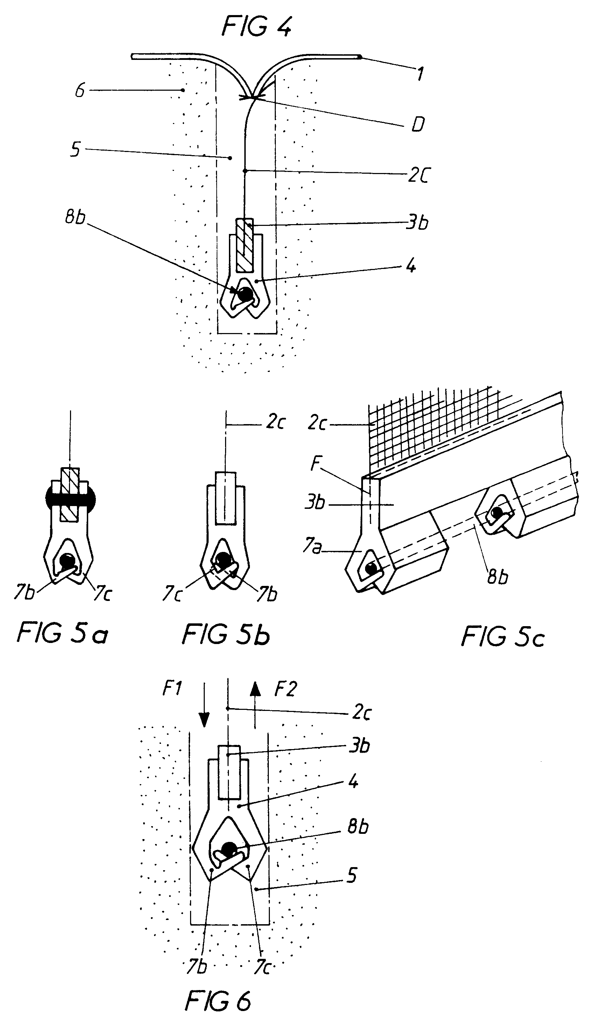

Lorsque la tringle 8b a échappé à ces languettes, ces dernières reprennent leur position initiale et la tringle se trouve alors insérée à l'intérieur du mousqueton par les deux languettes 7b et 7c, comme représenté à la figure 6.

On conçoit alors que toute action dans le sens de F2 ne peut permettre l'échappement de l'ensemble du dispositif.

La forme du mousqueton et ses dimensions sont avantageusement prévues pour occuper entièrement la largeur du puits 5, ce qui facilite l'introduction et le centrage de ce dispositif et, de plus permet d'éviter le déblocage du moyen d'accrochage.

Les avantages de l'invention apparaissent alors clairement, à savoir :
- facilité de montage ;
- très bonne tenue à l'échappement ;
- suppression des agrafes "nez de porc" précédemment utilisées dans les dispositifs connus.

Ce dispositif trouve son application notamment dans la réalisation de sièges pour automobiles et à usage domestique.

## Revendications

1. Dispositif d'accrochage permettant la réalisation de rappels de tissus de recouvrement de siège, consistant en une bande ou en un matériau relativement résistant (2c) se terminant par une barre (3b) caractérisé en ce que ladite barre est elle-même solidaire d'un moyen d'accrochage muni à sa partie inférieure de plusieurs mâchoires se terminant par des languettes en matériau élastique disposées à la manière de languettes d'un mousqueton.

2. Dispositif d'accrochage selon la revendication 1, caractérisé en ce que le mousqueton est destiné à coopérer avec une tringle (8b) prévue au fond d'un puits (5) réalisé au sein dudit siège.

3. Dispositif d'accrochage selon la revendication 2, caractérisé en ce que le mousqueton (4) a une structure telle qu'elle rend capable de s'encliqueter la tringle (8b) par simple insertion dans le puits (5).

4. Dispositif d'accrochage selon l'une quelconque des revendications 2 et 3, caractérisé en ce que la forme et les dimensions du mousqueton sont prévues pour occuper entièrement la largeur d'un puits (5) dans lequel ledit dispositif est introduit.

5. Dispositif d'accrochage selon l'une quelconque des revendications 1 à 4, caractérisé en ce que la barre et le moyen d'accrochage sont réalisés par co-extrusion.

6. Application du dispositif d'accrochage selon l'une quelconque des revendications 1 à 5, à la réalisation d'un rappel de coiffe de siège.

## Claims

1. A catching device for producing tucks in seat covering fabrics, consisting of a strip or a piece of material (2c) which is relatively strong and which terminates with a bar (3b) characterised in that said bar is itself fixed with respect to a catching means provided in its lower part with a plurality of jaws terminating with tongue portions of elastic material which are disposed in the manner of tongue portions of a snap hook.

2. A catching device according to claim 1 characterised in that the snap hook is intended to co-operate with a rod (8b) provided at the bottom of a well (5) within said seat.

3. A catching device according to claim 2 characterised in that the snap hook (4) is of a structure such that it makes the rod (8b) capable of coming into latching engagement by simple insertion into the well (5).

4. A catching device according to either one of claims 2 and 3 characterised in that the shape and the dimensions of the snap hook are intended to occupy entirely the width of a well (5) into which said device is introduced.

5. A catching device according to any one of claims 1 to 4 characterised in that the bar and the catching means are produced by co-extrusion.

6. Use of the catching device according to any one of claims 1 to 5 for producing a seat cover tuck.

## Patentansprüche

1. Befestigungsvorrichtung zum Festspannen von Sitzüberzügen, die aus einem Band oder aus einem relativ widerstandsfähigen Material (2c) besteht, das in einer Leiste (3b) endet, dadurch gekennzeichnet, daß die Leiste selbst mit einem Einhängemittel verbunden ist, das an seinem unteren Teil mit mehreren Klemmen versehen ist, die in Zungen aus elastischem Material enden, die in der Art von Zungen eines Karabinerhakens vorgesehen sind.

2. Befestigungsvorrichtung nach Anspruch l, dadurch gekennzeichnet, daß der Karabinerhaken für das Zusammenwirken mit einer kleinen Stange (8b) bestimmt ist, die am Grund eines Schachts (5) vorgesehen ist, der im Inneren des Sitzes ausgebildet ist.

3. Befestigungsvorrichtung nach Anspruch 2, dadurch gekennzeichnet, daß der Karabinerhaken (4) derart gebaut ist, daß er durch einfaches Einführen in den Schacht (5) an der kleinen Stange (8) einschnappen kann.

4. Befestigungsvorrichtung nach einem der Ansprüche 2 und 3, dadurch gekennzeichnet, daß die Form und die Abmessungen des Karabinerhakens so getroffen sind, daß sie die Breite eines Schachts (5), in den die Vorrichtung eingeführt wird, vollständig belegen.

5. Befestigungsvorrichtung nach einem der Ansprüche 1 bis 4, dadurch gekennzeichnet, daß die Leiste und das Einhängemittel durch gemeinsames Extrudieren hergestellt sind.

6. Anwendung der Befestigungsvorrichtung nach einem der Ansprüche 1 bis 5 beim Festspannen von Sitzüberzügen.
